# EUROPEAN PATENT SPECIFICATION

(11) **EP 1 861 338 B1**
(45) Date of publication and mention of the grant of the patent: **11.05.2016**
(21) Application number: 06710051.1
(22) Date of filing: 09.03.2006
(51) Int. Cl.: C03C 17/34, C03C 17/25, C03C 17/245

(54) **COATINGS**
BESCHICHTUNGEN
REVÊTEMENTS

(30) Priority: 14.03.2005 GB 0505074
(43) Date of publication of application: 05.12.2007
(73) Proprietor: Pilkington Group Limited, Nr. Ormskirk Lancashire L40 5UF (GB)
(72) Inventor: SIMPSON, Andrew Frazer, Preston, Lancashire PR4 6RR (GB)
(74) Representative: Pettet, Nicholas Edward
(86) International application number: PCT/GB2006/000837
(87) International publication number: WO 2006/097687

(56) References cited:
- GB-A- 2 031 756
- US-A- 6 110 597
- US-A1- 2002 182 421
- US-A1- 2003 162 037
- US-B1- 6 423 414
- DATABASE WPI Section Ch, Week 199621 Derwent Publications Ltd., London, GB; Class L01, AN 1996-205342 XP002380590 -& JP 08 073242 A (NIPPON SHEET GLASS CO LTD) 19 March 1996 (1996-03-19)

## Description

This invention relates to coated substrates and to methods for their production. In a preferred embodiment the substrate is a glass sheet, the coating comprises at least two layers and the coated glass sheet has the same hue both in transmission and reflection.

It is known in the art that applying a coating of a metal or metal oxide to the surface of a transparent substrate can modify the optical properties of the substrate. GB1455148 discloses a method for pyrolytically forming a coating on a glass substrate to modify the light transmission and/or reflection to give the coated glass a tinted appearance when viewed by transmitted or reflected light. USP 6,423,414B1 discloses glass substrates that are coated with an antimony doped tin oxide main layer which has a geometric thickness of at least 250nm and an outer reflective layer which has a geometric thickness ranging from 30 to 150nm to create an improvement in the luminous reflectance of the coated glass. USP 2002/0182421A1 discloses coated glass substrates comprising a defined overcoat layer on a main layer comprising mainly tin oxide that have a reflectance of greater that 10% and high luminous transmittance.

Coatings comprising a tin oxide layer are used to produce a solar control glazing with low emissivity properties. Coatings comprising a tin oxide layer doped with fluorine are used to reduce the heat transmitted through a glazing whilst maintaining a high visible light transmission. Coatings comprising an antimony doped tin oxide layer are used to coat a transparent substrate to provide a solar control glazing. Antimony doped tin oxide has an absorption in the visible part of the spectrum thereby imparting a blue hue to the coated product.

JP 08-073242 discloses heat reflecting glass formed by coating a glass substrate with a first film of tin oxide, or a mixed film of tin oxide and antimony oxide, and a second film of titanium oxide.

Coating a transparent substrate with a coloured layer suffers from the effect of optical interference which can modify the reflected colour making it difficult to obtain the desired colour in both transmission and reflection. To avoid or at least alleviate the undesirable colour resulting from interference effects, a colour suppressing underlayer (which may itself be a combination of sub-layers) may be applied to the glass prior to deposition of the main layer, which may be tinted or not. The composition and deposition of such colour suppressing underlayers is described in prior published patents including GB 2 031 756B, UK 2 115 315B, US 5 168 003 and EP 0 275 662B.

In certain circumstances it is desirable to produce a coated glass sheet that has substantially the same colour in both transmission and reflection. It is not always practical to provide the glass with a colour suppressing layer because processing conditions are not compatible with available precursors. This makes colour control of the coating in reflection particularly difficult, especially when substantially the same colour or hue is required both in transmission and reflection.

It is the principal objective of this invention to provide a coated substrate comprising at least two coating layers that has substantially the same hue in transmission and reflection that does not use a colour suppressing underlayer. Applicants have found that it is possible to modify the reflected colour of a substrate coated with a coloured layer by depositing a thinner overcoat layer having a higher refractive index than the tinted layer above the coloured layer. Accordingly from a first aspect this invention provides a coated glass sheet that has substantially the same hue in transmission and reflection which comprises a transparent substrate having a coating upon at least one surface, said coating comprising a coloured layer and an overcoat layer wherein the coloured layer comprises a tin oxide and at 540nm the refractive index of the overcoat layer is higher than that of the coloured layer, characterised in that the coated substrate has a visible light transmission between 25% and 55%.

Preferably the hue is blue.

It is preferred that the geometric thickness of the coloured layer is 100 220nm. The geometric thickness of the overcoat layer is 5 to 40nm, most preferably 10 to 25nm.

The coloured tin oxide layer comprises antimony doped tin oxide. The preferred concentration of the dopant is in the range 5 to 30 mole %, most preferably 15 to 25 mole%.

The overcoat layer comprises an oxide of titanium. In a preferred embodiment the overcoat layer is a titanium oxide.

Generally the coloured layer will be deposited onto a transparent substrate that is glass, preferably soda-lime-silica glass. It is preferred that the soda-lime-silica glass is in the form of a sheet preferably produced in a continuous process for example by a float process. In one preferred embodiment, the glass sheet is formed between a pair of rollers.

The glass sheet has a thickness between 2 and 10mm, preferably between 4 and 8mm. It is preferred that the substrate is substantially flat. In a preferred embodiment the substrate comprises at least one bent portion with a fold line running substantially parallel to an edge of the sheet. A profiled glass sheet of this type may be formed form a ribbon of clear glass where both lateral edges are bent upwards after the sheet has been formed. A profiled glass product of this type is sold by Pilkington plc under its trade mark PROFILIT.

The coloured layer is deposited directly onto a surface of the substrate and the overcoat layer is deposited directly onto the coloured layer. Such a coating is especially advantageous when used to coat a profiled glass sheet of the type disclosed above. After the edges of the glass sheet have been bent the two coatings may be applied to the glass whilst it is sufficiently hot to drive that deposition. The edges of the glass are normally bent upwards and the coating applied to the upper surface of the profiled glass.

The visible light transmission of the coated substrate is 25% to 55%, more preferably 30% to 40%. The hue of the coated substrate viewed in transmission is blue, preferably having a b* in the range -15 to -1, most preferably -10 to - 4 and a* in the range -3 to 3, preferably -1 to +1.

The hue in reflection from the side having the coloured layer is blue, preferably having a b* in the range -20 to -1, most preferably -15 to -5 and a* in the range -5 to +1.

The coated substrate has a hue in reflection from the side without the coloured layer which is blue, preferably having a b* in the range -25 to -1, most preferably -20 to -10 and a* in the range -5 to +1.

It is preferred that the coated substrate has an a* in reflection from the side without the coloured layer that is similar to the a* obtained in reflection from the side having the coloured layer. Preferably the coated substrate has an a* in reflection from the side without the coloured layer that is ±2 of the a* obtained in reflection from the side having the coloured layer.

From a second aspect this invention provides a method of producing a coated substrate that has substantially the same hue in transmission and reflection which comprises depositing a coloured layer onto a transparent substrate by contacting said transparent substrate with a fluid mixture comprising a precursor of a tin oxide, depositing an overcoat layer by contacting the coated substrate with a fluid mixture comprising a suitable precursor so that at 540nm the overcoat has a higher refractive index than the coloured layer.

The coloured layer or the overcoat layer can be applied by any chemical vapour deposition process. Pyrolytic processes such as spray pyrolysis are a convenient way of applying coatings to glass. In a preferred embodiment the coloured layer or the overcoat layer is deposited by spray pyrolysis.

The precursor for the coloured layer or the overcoat layer can be dissolved in a solvent which is then vapourised or sprayed onto the substrate. In the embodiment wherein the coloured layer comprises a tin oxide the precursor of tin oxide comprises monobutyltintrichloride (MBTC). In the embodiment wherein the coloured layer comprises an antimony doped tin oxide the precursor further comprises a precursor of antimony which is preferably antimony trichloride. The overcoat layer comprises a metal oxide chosen from group comprising an oxide of titanium. Preferably the overcoat layer comprises a titanium oxide. Suitable precursors of titanium oxide include a titanium alkoxide or titanium tetrachloride.

The heat of the substrate may provide a suitable source of the required energy so that a coating layer may be deposited on the substrate. Preferably the temperature of the substrate is at least 500°C, more preferably 550 to 700°C, most preferably 580 to 650°C.

The choice of substrate will affect the overall appearance of the coated substrate. By coating different substrates with different light transmission it is possible to produce coated substrates having a wide range of colours and light transmission values. The thickness of the substrate also affects the perceived colour of the coated substrate.

The substrate will be 2 to 10mm, most preferably 4 to 8mm thick. Preferably the transparent substrate will be neutral, more preferably at 7mm the substrate has a* in the range -7 and +2, b* in the range -3 to +3 and a visible light transmission of at least 25%, preferably between 30% and 90%.

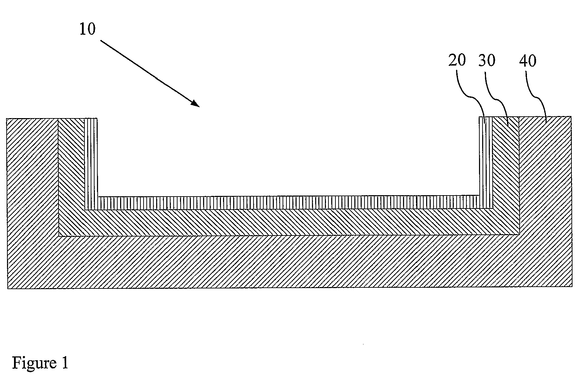

Figure 1 shows a cross section (not to scale) of a coated glass sheet according to this invention. Figure 1 comprises a coated sheet (10) comprising an overcoat layer (20) a coloured layer (30) and a substrate (40).

The terms colour and light transmission discussed herein are based on the standard definitions used in the CIE LAB system under illuminant D65 and 2° observer. The term hue used herein is taken to have the meaning given to it on page 533, volume 6 of the Kirk-Othmer encyclopaedia of chemical technology, 1979.

The invention is further described by the following examples.

### Example 1

A coloured layer (30) of antimony doped tin oxide was deposited onto a clear soda-lime-silica glass sheet (40). The glass sheet was in the form of a ribbon 250mm wide and 7mm thick moving at a speed of 3.6m/minute. The temperature of the glass just upstream of the coater was measured at about 630°C by optical pyrometry. The liquid precursor was a mixture of monobutyltintrichloride (MBTC) and antimony trichloride (SbCl₃) dissolved in ethanol. The ratio by weight of MBTC to SbCl₃ in the precursor is about 4:1. The precursor was at least 70% by weight ethanol and not less than 20% by weight MBTC. The precursor liquid was sprayed onto the ribbon at a flow rate of 200ml/minute.

Immediately after the coloured layer had been deposited, an overcoat layer (20) of titania was deposited from a precursor comprising the components shown in table 1.

**Table 1**

| Component | Concentration (% by weight) |
|---|---|
| 2-propanol | 5-10 |
| Titanium (IV) acetylacetonate | 20-50 |
| Xylene, mixture of isomers | 20-50 |
| Titanium tetraisopropanol | 5-10 |
| 2-butoxy-ethanol | 10-20 |

Other titanium alkoxide precursors could be used, for example titanium ethoxide. Additionally, titanium tetrachloride could be used. This precursor liquid was also sprayed onto the substrate at a flow rate of about 35ml/minute.

A coated transparent substrate (10) was produced having an antimony doped tin oxide layer (30) having a geometric thickness of 200nm and a titanium oxide overcoat layer (20) having a geometric thickness of 20nm. The geometric thickness was determined by XPS profiling.

The coated transparent substrate had a blue hue in transmission and reflection. The optical properties obtained are given in table 2.

### Comparative Example 2.

A coloured layer of antimony doped tin oxide was deposited onto a clear soda-lime-silica glass sheet. The glass sheet was in the form of a ribbon 250mm wide by 7mm thick and was moving at a speed of 3.6m/minute. The temperature of the glass just upstream of the coater was measured at about 630°C by optical pyrometry. The liquid precursor was a mixture of monobutyltintrichloride (MBTC) and antimony trichloride (SbCl₃) dissolved in ethanol. The ratio by weight of MBTC to SbCl₃ in the precursor is about 4:1. The precursor was at least 70% by weight ethanol and not less than 20% by weight MBTC. The precursor liquid was sprayed onto the ribbon at a flow rate of 60ml/minute. A coloured layer with a geometric thickness of 60nm was obtained and the optical properties are given in table 2. There was no overcoat layer. The geometric thickness was determined by XPS profiling.

The coated substrate that was produced did not have the same hue in transmission and reflection and had high visible light transmission.

### Comparative Example 3.

A coloured layer of antimony doped tin oxide was deposited onto a clear soda-lime-silica glass sheet that was 7mm thick using the same conditions as in example 2 except the precursor liquid was sprayed onto the ribbon at a flow rate of 170ml/minute. A coloured layer with a geometric thickness of 200nm was obtained and the optical properties are given in table 2. There was no overcoat layer. The geometric thickness was determined using electron microscopy.

The coated substrate that was produced did not have the same hue in transmission and reflection.

### Comparative Example 4

A coloured layer of antimony doped tin oxide was deposited onto a clear soda-lime-silica glass sheet that was 7mm thick using the same conditions as in example 2 except the precursor liquid was sprayed onto the ribbon at a flow rate of 185ml/minute. A coloured layer with a geometric thickness of 225nm was obtained and the optical properties are given in table 2. There was no overcoat layer. The geometric thickness was determined by electron microscopy.

The coated substrate that was produced had almost the same hue in transmission and reflection but was becoming too dark in transmission.

### Example 5

A coated transparent substrate 7mm thick was produced having an antimony doped tin oxide layer having a geometric thickness of 200nm and a titanium oxide overcoat layer having a geometric thickness of 40nm. The geometric thickness was determined using electron microscopy. The properties are given in table 2. The substrate was a clear soda-lime-silica glass sheet.

### Example 6 (not part of the invention)

A coated transparent substrate 7mm thick was produced having an antimony doped tin oxide layer having a geometric thickness of 200nm and a titanium oxide overcoat layer having a geometric thickness of 50mn. The geometric thickness was determined using electron microscopy. The properties are given in table 2. The substrate was a clear soda-lime-silica glass sheet.

### Example 7

A coated transparent substrate 7mm thick was produced having an antimony doped tin oxide layer having a geometric thickness of 210nm and a titanium oxide overcoat layer having a geometric thickness of 30nm. The geometric thickness was determined by XPS profiling. The coloured layer had 17 mole % antimony determined using XPS. The properties are given in table 2. The substrate was a clear soda-lime-silica glass sheet.

### Example 8

A coated transparent substrate 7mm thick was produced having an antimony doped tin oxide layer having a geometric thickness of 210nm and a titanium oxide overcoat layer having a geometric thickness of 30nm. The geometric thickness was determined by XPS profiling. The coloured layer had 18 mole % antimony determined by XPS. The properties are given in table 2. The substrate was a clear soda-lime-silica glass sheet.

**Table 2**

| | **Transmission** | | | **Reflection from Uncoated Side** | | | **Reflection from Coated Side** | | |
|---|---|---|---|---|---|---|---|---|---|
| | **% Transmission** | **A*** | **b*** | **% Reflection** | **a*** | **B*** | **% Reflection** | **a*** | **b*** |
| **Example 1** | 34.4 | 0.6 | -7.0 | 5.2 | 1.2 | -14.3 | 8.1 | -0.2 | -10.8 |
| **Comparative Example 2** | 62.0 | -1.9 | -1.0 | 13.5 | -2.9 | -5.6 | 19.0 | -1.0 | -3.0 |
| **Comparative Example 3** | 35.9 | -0.9 | -8.3 | 5.1 | 6.0 | -13.9 | 7.0 | 4.0 | -12.3 |
| **Comparative Example 4** | 30.2 | 0.5 | -11.4 | 5.6 | -1.0 | -11.8 | 8.2 | 0.0 | -8.1 |
| **Example 5** | 35.3 | -0.3 | -8.3 | 5.6 | 0.4 | -14.9 | 7.4 | -1.1 | -11.6 |
| **Example 6** | 36.8 | 0.2 | -5.5 | 6.5 | -0.7 | -18.5 | 10.4 | -4.0 | -14.6 |
| **Example 7** | 38.1 | 0.9 | -4.5 | 6.8 | -2.1 | -16.5 | 10.7 | -4.7 | -12.5 |
| **Example 8** | 34.3 | 1.9 | -7.3 | 7.8 | -7.0 | -9.8 | 12.2 | -6.0 | -5.7 |

## Claims

1. A coated glass sheet (10) that has substantially the same blue hue in transmission and reflection, the coating comprising a coloured layer (30) and an overcoat layer (20) wherein the coloured layer is deposited directly onto a surface of the glass sheet and the overcoat layer is deposited directly onto the coloured layer, the coloured layer comprising antimony doped tin oxide and having a geometric thickness between 100nm and 220nm, the overcoat layer comprising an oxide of titanium and having a geometric thickness of between 5 and 40nm, the glass sheet having a thickness between 2mm and 10mm, and at 540nm the refractive index of the overcoat layer is higher than that of the coloured layer, and wherein the visible light transmission of the coated glass sheet is between 25% and 55%.

2. A coated glass sheet according to claim 1, wherein the visible light transmission is between 30% and 40%.

3. A coated glass sheet according to claim 1 or claim 2, wherein the overcoat layer has a geometric thickness of between 10nm and 25nm.

4. A coated glass sheet according to any preceding claim, wherein the concentration of antimony is in the range 5 to 30 mole %, preferably 15 to 25 mole%.

5. A coated glass sheet according to any preceding claim, wherein the glass sheet comprises at least one bent portion with a fold line running substantially parallel to an edge of said sheet.

6. A coated glass sheet according to any of the preceding claims, wherein the hue of the coated glass sheet viewed in transmission has a b* in the range -15 to -1, preferably -10 to -4.

7. A coated glass sheet according claim 6, wherein the colour of the coated glass sheet in transmission has a* in the range -3 to +3, preferably -1 to +1.

8. A coated glass sheet according to any of the preceding claims, wherein the hue in reflection of the coated glass sheet from the side having the coloured layer has a b* in the range -20 to -1, preferably -15 to -5.

9. A coated glass sheet according to claim 8, wherein the reflected colour of the coated glass sheet from the side with the coloured layer has a* in the range -5 to +1.

10. A coated glass sheet according to any of the preceding claims wherein the hue in reflection of the coated glass sheet from the side without the coloured layer has a b* in the range -25 to -1, most preferably -20 to -10.

11. A coated glass sheet according to claim 10, wherein the reflected colour of the coated glass sheet from the side without the coloured layer has a* in the range - 5 to +1.

12. A coated glass sheet according to claim 11, wherein the reflected colour of the coated glass sheet from the side without the coloured layer has an a* that is ±2 of the a* obtained in reflection from the side with the coloured layer.

13. A method of producing a coated glass sheet that has substantially the same blue hue in transmission and reflection, the method comprising contacting a surface of the glass sheet with a fluid mixture comprising a source of tin oxide and a precursor of antimony to deposit a coloured layer comprising antimony doped tin oxide having a geometric thickness between 100 and 220nm directly onto the surface of the glass sheet, after which a fluid mixture comprising a source of a titanium oxide is contacted with the coloured layer to deposit an overcoat layer of a titanium oxide having a thickness between 5 and 40nm directly onto the coloured layer, such that at 540nm the overcoat layer has a higher refractive index than the coloured layer and the coated glass sheet has a visible light transmission between 25% and 55%.

14. A method according to claim 13, wherein the coloured layer is deposited by atmospheric pressure chemical vapour deposition.

15. A method according to claim 14, wherein the coloured layer is deposited by spray pyrolysis.

16. A method according to any of claims 13 to 15, wherein the source of tin oxide comprises monobutyltintrichloride.

17. A method according to claim 16 wherein the precursor of antimony is antimony trichloride.

18. A method according to any of the claims 13 to 17, wherein the source of titanium oxide comprises a titanium alkoxide or titanium tetrachloride.

19. A method according to any of claims 13 to 18 wherein the temperature of the glass sheet is at least 500°C, preferably in the temperature range 550°C to 700°C, more preferably 580°C to 650°C.

20. A method according to any of claims 13 to 20 wherein the overcoat layer is deposited by atmospheric pressure chemical vapour deposition.

21. A method according to any of claims 13 to 20 wherein the overcoat layer is deposited by spray pyrolysis.

## Patentansprüche

1. Beschichtete Glasscheibe (10), die im Wesentlichen den gleichen blauen Farbton in Transmission und Reflexion aufweist, wobei die Beschichtung eine gefärbte Schicht (30) und eine Überzugsschicht (20) umfasst, wobei die gefärbte Schicht direkt auf einer Oberfläche der Glasscheibe abgeschieden ist und die Überzugsschicht direkt auf der gefärbten Schicht abgeschieden ist, wobei die gefärbte Schicht ein Antimon-dotiertes Zinnoxid umfasst und eine geometrische Dicke im Bereich von 100 nm bis 220 nm aufweist, wobei die Überzugsschicht ein Oxid von Titan umfasst und eine geometrische Dicke im Bereich von 5 bis 40 nm aufweist, wobei die Glasscheibe eine Dicke im Bereich von 2 mm bis 10 mm aufweist und wobei der Brechungsindex der Überzugsschicht bei 540 nm höher als der Brechungsindex der gefärbten Schicht ist, und wobei die Transmission von sichtbarem Licht des beschichteten Glases im Bereich von 25 % bis 55 % liegt.

2. Beschichtete Glasscheibe nach Anspruch 1, wobei die Transmission von sichtbarem Licht im Bereich von 30 % bis 40 % liegt.

3. Beschichtete Glasscheibe nach Anspruch 1 oder Anspruch 2, wobei die Überzugsschicht eine geometrische Dicke im Bereich von 10 nm bis 25 nm aufweist.

4. Beschichtete Glasscheibe nach einem der vorhergehenden Ansprüche, wobei die Antimonkonzentration in dem Bereich von 5 bis 30 Mol-%, vorzugsweise 15 bis 25 Mol-%, liegt.

5. Beschichtete Glasscheibe nach einem der vorhergehenden Ansprüche, wobei die Glasscheibe mindestens einen gebogenen Bereich mit einer Biegelinie umfasst, die sich im Wesentlichen parallel zu einem Rand der Scheibe erstreckt.

6. Beschichtete Glasscheibe nach einem der vorhergehenden Ansprüche, wobei der Farbton der beschichteten Glasscheibe in Transmission gesehen ein b* in dem Bereich von -15 bis -1, vorzugsweise -10 bis -4, aufweist.

7. Beschichtete Glasscheibe nach Anspruch 6, wobei die Farbe der beschichteten Glasscheibe in Transmission ein a* in dem Bereich von -3 bis +3, vorzugsweise -1 bis +1, aufweist.

8. Beschichtete Glasscheibe nach einem der vorhergehenden Ansprüche, wobei der Farbton der beschichteten Glasscheibe in Reflexion von der Seite, die die gefärbte Schicht aufweist, ein b* in dem Bereich von -20 bis -1, vorzugsweise -15 bis -5, aufweist.

9. Beschichtete Glasscheibe nach Anspruch 8, wobei die reflektierte Farbe der beschichteten Glasscheibe von der Seite mit der gefärbten Schicht ein a* in dem Bereich von -5 bis +1 aufweist.

10. Beschichtete Glasscheibe nach einem der vorhergehenden Ansprüche, wobei der Farbton der beschichteten Glasscheibe in Reflexion von der Seite ohne die gefärbte Schicht ein b* in dem Bereich von -25 bis -1, am bevorzugtesten -20 bis-10, aufweist.

11. Beschichtete Glasscheibe nach Anspruch 10, wobei die reflektierte Farbe der beschichteten Glasscheibe von der Seite ohne die gefärbte Schicht ein a* in dem Bereich von -5 bis + 1 aufweist.

12. Beschichtete Glasscheibe nach Anspruch 11, wobei die reflektierte Farbe der beschichteten Glasscheibe von der Seite ohne die gefärbte Schicht ein a* aufweist, das ±2 des a* ist, das in Reflexion von der Seite mit der gefärbten Schicht erhalten wird.

13. Verfahren zum Herstellen einer beschichteten Glasscheibe, die im Wesentlichen den gleichen blauen Farbton in Transmission und Reflexion aufweist, wobei das Verfahren das Inkontaktbringen einer Oberfläche der Glasscheibe mit einem fluiden Gemisch umfasst, das eine Quelle für Zinnoxid und einen Vorläufer von Antimon umfasst, um eine gefärbte Schicht, die Antimon-dotiertes Zinnoxid umfasst, die eine geometrische Dicke im Bereich von 100 bis 220 nm aufweist, direkt auf die Oberfläche der Glasscheibe abzuscheiden, wonach ein fluides Gemisch, das eine Quelle für Titanoxid umfasst, mit der gefärbten Schicht in Kontakt gebracht wird, um eine Überzugsschicht aus einem Titanoxid, die eine Dicke im Bereich von 5 bis 40 nm aufweist, direkt auf die gefärbte Schicht abzuscheiden, so dass die Überzugsschicht bei 540 nm einen höheren Brechungsindex als die gefärbte Schicht aufweist und die beschichtete Glasscheibe eine Transmission von sichtbarem Licht im Bereich von 25 % bis 55 % aufweist.

14. Verfahren nach Anspruch 13, wobei die gefärbte Schicht durch chemische Glasphasenabscheidung bei Atmosphärendruck abgeschieden wird.

15. Verfahren nach Anspruch 14, wobei die gefärbte Schicht durch Sprühpyrolyse abgeschieden wird.

16. Verfahren nach einem der Ansprüche 13 bis 15, wobei die Quelle für Zinnoxid Monobutylzinntrichlorid umfasst.

17. Verfahren nach Anspruch 16, wobei der Vorläufer von Antimon Antimontrichlorid ist.

18. Verfahren nach einem der Ansprüche 13 bis 17, wobei die Quelle für Titanoxid ein Titanalkoxid oder Titantetrachlorid umfasst.

19. Verfahren nach einem der Ansprüche 13 bis 18, wobei die Temperatur der Glasscheibe bei mindestens 500 °C, vorzugsweise in dem Temperaturbereich von 550 °C bis 700 °C, noch bevorzugter 580 °C bis 650 °C liegt.

20. Verfahren nach einem der Ansprüche 13 bis 20, wobei die Überzugsschicht durch chemische Gasphasenabscheidung bei Atmosphärendruck abgeschieden wird.

21. Verfahren nach einem der Ansprüche 13 bis 20, wobei die Überzugsschicht durch Sprühpyrolyse abgeschieden wird.

## Revendications

1. Feuille de verre revêtue (10) qui présente sensiblement la même teinte bleue en transmission et en réflexion, le revêtement comprenant une couche colorée (30) et une surcouche (20), dans laquelle la couche colorée est déposée directement sur une surface de la feuille de verre et la surcouche est déposée directement sur la couche colorée, la couche colorée comprenant de l'oxyde d'étain dopé à l'antimoine et ayant une épaisseur géométrique entre 100 nm et 220 nm, la surcouche comprenant un oxyde de titane et ayant une épaisseur géométrique entre 5 nm et 40 nm, la feuille de verre ayant une épaisseur entre 2 mm et 10 mm et, à 540 nm, l'indice de réfraction de la surcouche est supérieur à celui de la couche colorée, et dans laquelle la transmission de lumière visible de la feuille de verre revêtue est entre 25 % et 55 %.

2. Feuille de verre revêtue selon la revendication 1, dans laquelle la transmission de lumière visible est entre 30 % et 40 %.

3. Feuille de verre revêtue selon la revendication 1 ou la revendication 2, dans laquelle la surcouche possède une épaisseur géométrique entre 10 nm et 25 nm.

4. Feuille de verre revêtue selon l'une quelconque des revendications précédentes, dans laquelle la concentration en antimoine est située dans la plage allant de 5 % à 30 % en mole, de préférence de 15 % à 25 % en mole.

5. Feuille de verre revêtue selon l'une quelconque des revendications précédentes, dans laquelle la feuille de verre comprend au moins une partie pliée avec une ligne de pliage sensiblement parallèle à un bord de ladite feuille.

6. Feuille de verre revêtue selon l'une quelconque des revendications précédentes, dans laquelle la teinte de la feuille de verre revêtue visualisée en transmission présente un b* situé dans la plage allant de -15 à -1, de préférence de -10 à -4.

7. Feuille de verre revêtue selon la revendication 6, dans laquelle la couleur de la feuille de verre revêtue en transmission présente un a* situé dans la plage allant de -3 à +3, de préférence de -1 à +1.

8. Feuille de verre revêtue selon l'une quelconque des revendications précédentes, dans laquelle la teinte en réflexion de la feuille de verre revêtue à partir du côté ayant la couche colorée présente un b* situé dans la plage allant de -20 à -1, de préférence de -15 à -5.

9. Feuille de verre revêtue selon la revendication 8, dans laquelle la couleur réfléchie de la feuille de verre revêtue à partir du côté ayant la couche colorée présente un a* situé dans la plage allant de -5 à +1.

10. Feuille de verre revêtue selon l'une quelconque des revendications précédentes, dans laquelle la teinte en réflexion de la feuille de verre revêtue à partir du côté sans la couche colorée présente un b* situé dans la plage allant de -25 à -1, et de manière préférée entre toutes de -20 à -10.

11. Feuille de verre revêtue selon la revendication 10, dans laquelle la couleur réfléchie de la feuille de verre revêtue à partir du côté sans la couche colorée présente un a* situé dans la plage allant de -5 à +1.

12. Feuille de verre revêtue selon la revendication 11, dans laquelle la couleur réfléchie de la feuille de verre revêtue à partir du côté sans la couche colorée présente un a* qui est à ± 2 du a* obtenu en réflexion à partir du côté ayant la couche colorée.

13. Procédé de production d'une feuille de verre revêtue qui présente sensiblement la même teinte bleue en transmission et en réflexion, le procédé comprenant le contact d'une surface de la feuille de verre avec un mélange liquide comprenant une source d'oxyde d'étain et un précurseur d'antimoine pour déposer une couche colorée comprenant de l'oxyde d'étain dopé à l'antimoine ayant une épaisseur géométrique entre 100 nm et 220 nm directement sur la surface de la feuille de verre, après quoi un mélange liquide comprenant une source d'oxyde de titane est mis en contact avec la couche colorée pour déposer une surcouche d'oxyde de titane ayant une épaisseur entre 5 nm et 40 nm directement sur la couche colorée, de telle sorte qu'à 540 nm, la surcouche présente un indice de réfraction supérieur à celui de la couche colorée et la feuille de verre revêtue présente une transmission de lumière visible entre 25 % et 55 %.

14. Procédé selon la revendication 13, dans lequel la couche colorée est déposée par dépôt chimique en phase vapeur à pression atmosphérique.

15. Procédé selon la revendication 14, dans lequel la couche colorée est déposée par pulvérisation pyrolytique.

16. Procédé selon l'une quelconque des revendications 13 à 15, dans lequel la source d'oxyde d'étain comprend du trichlorure de monobutylétain.

17. Procédé selon la revendication 16, dans lequel le précurseur d'antimoine est le trichlorure d'antimoine.

18. Procédé selon l'une quelconque des revendications 13 à 17, dans lequel la source d'oxyde de titane comprend un alcoolate de titane ou un tétrachlorure de titane.

19. Procédé selon l'une quelconque des revendications 13 à 18, dans lequel la température de la feuille de verre est au moins de 500 °C, de préférence dans la plage de températures allant de 550 °C à 700 °C, et de manière davantage préférée de 580 °C à 650 °C.

20. Procédé selon l'une quelconque des revendications 13 à 20, dans lequel la surcouche est déposée par dépôt chimique en phase vapeur à pression atmosphérique.

21. Procédé selon l'une quelconque des revendications 13 à 20, dans lequel la surcouche est déposée par pulvérisation pyrolytique.
